Europäisches Patentamt

European Patent Office

Office européen des brevets

(11) Numéro de publication: **0 274 932 B1**

# FASCICULE DE BREVET EUROPEEN

(45) Date de publication de fascicule du brevet: **04.03.92**  (51) Int. Cl.⁵: **B23Q 3/12**, B32B 31/26

(21) Numéro de dépôt: **87402741.0**

(22) Date de dépôt: **03.12.87**

(54) **Accouplement ou dispositif d'accrochage rapide pour porte-outil et dispositif de serrage.**

(30) Priorité: **17.12.86 FR 8617664**

(43) Date de publication de la demande:
**20.07.88 Bulletin 88/29**

(45) Mention de la délivrance du brevet:
**04.03.92 Bulletin 92/10**

(84) Etats contractants désignés:
**AT CH DE GB IT LI SE**

(56) Documents cités:
**EP-A- 0 189 697**
**EP-A- 0 238 373**
**DE-U- 8 526 515**
**FR-A- 878 903**
**GB-A- 552 606**

(73) Titulaire: **SANDVIK TOBLER S.A.**
**4, Avenue de la Vieille France**
**F-95380 Louvres(FR)**

(72) Inventeur: **Barbieux, Jacques**
**20, Avenue Beauséjour**
**F-95380 Louvres(FR)**

(74) Mandataire: **Lhuillier, René et al**
**Cabinet Lepeudry, 52, avenue Daumesnil**
**F-75012 Paris(FR)**

## Description

La présente invention concerne un accouplement pour réaliser un accrochage rapide entre un organe d'une machine-outil et un système de retenue, tel qu'un porte-outil ou un dispositif de serrage, tel qu'un mandrin.

Le problème que vise à résoudre l'invention est de proposer des moyens pour absorber sans dommages un certain débattement angulaire du système de retenue amovible par rapport à la machine-outil, ces moyens consistant en un jeu entre ces deux éléments.

Un dispositif de ce genre est connu du document EP-A-0.189.697 qui révèle les caractéristiques (a) à (f) de la revendication 1. Toutefois, il n'est pas prévu de jeu entre la partie avant de la cassette et l'épaulement annulaire porté par la face frontale du corps annulaire (caractéristique g).

Le document EP-A-0.238.373, qui fait partie de l'état de la technique au sens de l'article 54(3) de la CBE, décrit additionnellement la caractéristique (g) de la revendication 1. Bien que le jeu prévu dans ce document donne satisfaction, la demanderesse a découvert que la présence de surfaces coniques sur la cassette et sur ledit épaulement annulaire, entre lesquelles existe encore un jeu, permettait de résoudre plus complètement le problème précité.

Le dispositif selon l'invention inclut donc les caractéristiques (h) et (i) de la revendication 1.

D'autres particularités de l'invention apparaîtront à la lumière de la description qui suit d'un mode de réalisation présenté à titre d'exemple et illustré à l'aide de dessins, dont

la figure 1 présente une vue en coupe axiale selon une première variante du dispositif selon l'invention, et

la figure 2 une vue en coupe axiale selon une deuxième variante.

Le dispositif d'accrochage est monté dans un bâti (15) de la machine-outil. Il comporte un corps annulaire (16) fixé sur la partie avant (15) de la machine-outil. La partie avant (17) présente un alésage central dans lequel est monté en coulissement un piston (18) en forme de fourreau servant de commande d'accrochage et actionné en coulissement par des moyens non représentés de la machine-outil.

A l'intérieur du fourreau est logé un tirant central (30) pouvant être actionné en coulissement indépendamment de l'action exercée sur le fourreau et dans le prolongement duquel est logée la tête d'une tige (40) du porte-outil ou du dispositif de serrage.

Une cassette annulaire amovible (1) solidaire du système de porte-outil ou de dispositif de serrage est placée contre la face frontale avant du corps annulaire (16). Elle est munie à l'endroit de jonction d'un ou de plusieurs évidements (2) pour loger des pions d'entraînement (3) en rotation de la cassette.

Le corps (16) présente sur sa face intérieure un bossage (19) et une extrémité (20), dont les faces intérieures constituent une chemise de guidage du piston-fourreau (18).

Entre le bossage (19) et l'extrémité (20) sont prévus des évidements pour loger des coulisseaux (21) dont la face inférieure est inclinée vers l'avant. Sur l'une de ses faces latérales, le coulisseau est muni d'un creux pour loger un pion de guidage et de retenue (22) solidaire du corps (16). La face intérieure du piston-fourreau (18) présente une section conique (23), dont la pente coopère avec la face inférieure inclinée de coulisseau (21). La section conique (23) est suivie d'un évidement (24) permettant l'effacement radial du coulisseau.

La face frontale du corps (16) contre laquelle est placée la cassette (1) présente un épaulement annulaire interne (4). La paroi annulaire intérieure de la cassette et la paroi annulaire de l'épaulement présentent toutes les deux des sections droites formées par une première zone conique, respectivement (5a) et (16a), suivi par une deuxième zone cylindrique d'axe parallèle à celui de la cassette, repectivement (5b) et (16b).

Les deux zones, conique et cylindrique, de la paroi annulaire de la cassette sont suivis par un évidement (6) servant à loger le coulisseau (21).

Les zones coniques de la cassette (5a) et de l'épaulement annulaire (16a) sont espacés d'un jeu prédéterminé, pouvant être compris entre 0,002 et 0,010 mm, de préférence entre 0,004 et 0,006 mm.

Les zones cylindriques (5b) et (16b) sont espacées d'un jeu prédéterminé, pouvant être compris entre 0,3 et 1,5 mm, de préférence entre 0,5 et 1 mm. L'angle que font les zones coniques (5a) et (16a) avec l'axe de la cassette peut varier de 10 à 30°.

Le coulisseau (21) présente une face biseautée extérieure (7), tandis que l'évidement (6) de la casette servant à loger le coulisseau présente également une face inclinée correspondante (8), de façon à ce qu'en position de verrouillage la face (7) prenne appui avec serrage sur la face (8), assurant ainsi un bon centrage avec une précision parfaite de la cassette par rapport au corps de la machine, inférieure ou égale à 0,001 mm.

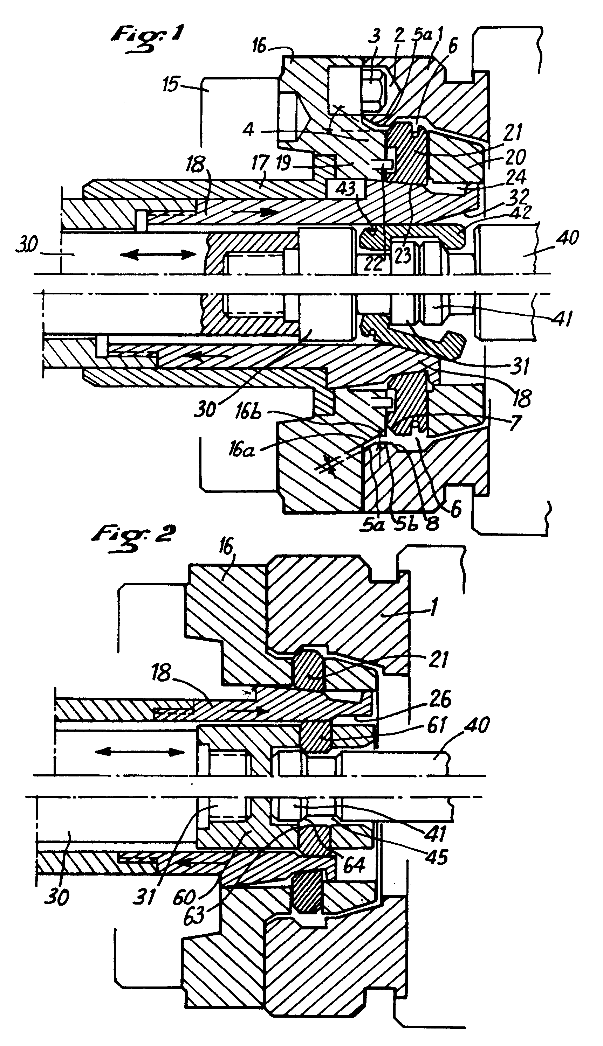

A l'intérieur du fourreau (18) coulisse librement le tirant (30) muni d'une tête (31). Selon la variante représentée à la figure 1, la tête (41) de la tige de retenue (40) et la tête (31) se présentent sous forme de bossages annulaires, dont la liaison assure l'accouplement des deux pièces.

Cette liaison est assurée par des bras de pinces (42), dont une extrémité est articulée en pivotement en (43). Les pinces ont une forme telle, qu'en position d'alignement, lorsqu'elles sont repoussées par l'alésage cylindrique de fourreau, elles s'appliquent contre les têtes (31) et (41) en assurant la liaison entre les deux têtes.

A son extrémité, la face intérieure du fourreau est munie d'une partie conique (32) qui, lors du recul du fourreau, vient en regard de bras de pinces et permet leur écartement pour libérer la liaison.

Selon la variante représentée à la figure 2, une pièce de raccordement (60) est solidaire du tirant (30) et à son extrémité opposée creuse est logée la tête de la tige de commande de l'outil, du porte-outil ou du dispositif de serrage, munie d'une gorge (45).

A l'intérieur de la pièce de raccordement (60) sont ménagés un ou plusieurs logements pour des coulisseaux (61), dont une face biseautée intérieure (63) coopère avec une face conique (64), qui termine la gorge (45) de la tête (41) de la tige (40), pour assurer le blocage de la tête (41) à l'intérieur de la pièce de raccordement (60), lorsque l'alésage du fourreau (18) refoule le coulisseau (61) à l'intérieur de son logement.

La face intérieure du fourreau est munie vers son extrémité avant d'une section de diamètre élargi (26) qui venant en regard du coulisseau (61) en position de déblocage permet son effacement et le dégagement de la tige.

Le fonctionnement du dispositif est le suivant.

Le fourreau (18) étant reculé dans la position montrée dans les parties inférieures des figures 1 et 2, on insère la cassette (1) en coiffant l'extrémité du corps (16) de la machine-outil, de façon à faire pénétrer le pion d'entraînement (3) dans son logement (2), les coulisseaux (21) étant en position d'effacement retenus dans les évidements correspondants du fourreau (18). La tige de commande (40) n'est ni retenue par les pinces (42) selon la figure 1, ni bloquée par des coulisseaux (61) selon la figure 2.

Lorsqu'on fait coulisser le fourreau (18) de gauche à droite (voir parties supérieures des figures 1 et 2), la partie conique (23) de la face extérieure du fourreau repousse radialement le coulisseau (21) jusqu'à ce que sa face biseautée (7) s'appuie avec serrage sur la face correspondante (8) de la cassette (1), assurant ainsi la fixation et le centrage de la cassette. En outre, on maintient ainsi le jeu souhaité entre zones coniques (5a) et (16a) d'une part, et entre les zones cylindriques (5b) et (16b) d'autre part.

Presque simultanément s'opère le blocage des têtes du tirant (30) et de la tige de commande (40).

Conformément à la première variante (figure 1), l'alésage cylindrique du fourreau (18) applique les bras de pince (42), qui en pivotant autour de leurs articulations (43), enserrent en les bloquant les têtes (31) et (41) munies de bossages.

Conformément à la deuxième variante (figure 2), l'alésage cylindrique du fourreau (18) repousse radialement les coulisseaux (61) à l'intérieur de la gorge (45) contre la pièce de raccordement (60), le tirant et la tige se trouvant solidarisés par l'intermédiaire de cette pièce.

Pour débloquer la liaison tirant-tige, on fait accomplir au fourreau le trajet inverse. Dans la première variante, la partie conique (32) de l'alésage du fourreau vient en regard de bras de pinces (42), ce qui libère la liaison. Dans la deuxième variante, la section (26) de diamètre élargie vient en regard du coulisseau (61) et l'effacecement radial du coulisseau produit le même effet. Ainsi, la fixation de la cassette sur le dispositif d'accouplement effectuée par la poussée vers l'avant du fourreau a pour effet à la fois la fixation et le centrage de la cassette du porte-outil ou dispositif de serrage et l'accouplement du tirant central avec la tige de commande du porte-outil ou du dispositif de serrage.

Un tel principe permet un déplacement axial du tirant central pratiquement sans que sa course soit limitée par les contraintes dues aux autres organes d'accouplement ou de verrouillage.

## Revendications

1. Accouplement pour réaliser un accrochage rapide entre un organe d'une machine-outil (15) et un système de retenue, tel qu'un porte-outil ou un dispositif de serrage, tel qu'un mandrin, comportant

   a) un corps annulaire (16) destiné à être fixé sur ladite machine-outil,
   b) une cassette amovible (1) de forme annulaire, solidaire du système de retenue pour l'accrochage entre l'organe de la machine-outil et le système de retenue,
   c) un verrouillage irréversible réalisé au moyen de coulisseaux (21) comprenant des surfaces de contact (23) qui, en position de blocage, coopèrent avec des surfaces correspondantes,
   d) d'un piston (18) en forme de fourreau à l'intérieur duquel est logé,
   e) un tirant central mobile (30) dont, en position de blocage, la tête (31) est reliée de façon fixe à une tige de commande (40) du système de retenue,
   f) ledit corps annulaire (16) étant muni à sa face frontale d'un organe d'entraînement (3) en rotation de la cassette, laquelle face présente un épaulement annulaire interne (4),
   g) la partie avant de la cassette étant logée contre ladite face frontale du corps annulaire, et avec jeu en regard dudit épaulement annulaire,

h) ladite cassette étant placée contre la face frontale du corps annulaire avec un centrage et une précision excellents, de l'ordre de 0,001 mm maximum,

i) la paroi annulaire intérieure de la cassette et la paroi annulaire de l'épaulement présentant, à l'endroit du logement de l'avant de la cassette dans ledit épaulement, des sections droites formées d'au moins une zone conique (5a, 16a), les deux zones étant espacées d'un jeu prédéterminé de sécurité, de façon à ce que le déplacement axial du tirant central soit possible sans que sa course soit limitée par des contraintes dues aux autres organes d'accouplement ou de verrouillage.

2. Accouplement selon la revendication 1, caractérisé en ce que la valeur du jeu entre les zones coniques varie entre 0,002 et 0,010 mm.

3. Accouplement selon la revendication 2, caractérisé en ce que la valeur du jeu entre les zones coniques varie entre 0,004 et 0,006 mm.

4. Accouplement selon l'une des revendications 1 à 3, caractérisé en ce que les zones coniques (5a), (16a) sont suivies par des zones cylindriques (5b), (16b) d'axe parallèle à l'axe de la cassette, lesquelles zones cylindriques sont espacées entre elles d'un jeu prédéterminé.

5. Accouplement selon la revendication 4, caractérisé en ce que la valeur du jeu entre les zones cylindriques varie entre 0,3 et 1,5 mm.

6. Accouplement selon la revendication 5, caractérisé en ce que la valeur du jeu entre les zones cylindriques varie entre 0,5 et 1 mm.

7. Accouplement selon l'une des revendications 1 à 3, caractérisé en ce que les zones coniques (5a), (16a) des sections droites des parois annulaires sont inclinées vers l'avant d'un angle pouvant varier de 10 à 30° sur l'axe de la cassette.

8. Accouplement selon l'une des revendications 1 à 7, caractérisé en ce qu'entre la partie annulaire avant du corps annulaire (16), qui présente un bossage annulaire interne (19), et son extrémité (20) sont ménagés des évidements ou une gorge pour loger lesdits coulisseaux (21).

9. Accouplement selon la revendication 8, caractérisé en ce que le bossage annulaire interne (19) du corps annulaire (16) et son extrémité (20) constituent des surfaces de guidage du piston (18).

10. Accouplement selon la revendication 8, caractérisé en ce que la face inférieure de chaque coulisseau (21) est inclinée pour coopérer en position de verrouillage avec une partie conique (23) que présente le piston sur sa face extérieure.

11. Accouplement selon l'une des revendications 1 à 10, caractérisé en ce que la paroi annulaire interne de la cassette présente, à l'endroit du logement de chaque colisseau (21), un évidement (6) pour qu'en position de verrouillage une face biseautée (7) du coulisseau vienne prendre appui avec serrage sur une face biseautée correspondante (8) de l'épaulement interne de la cassette.

12. Accouplement selon l'une des revendications 1 à 10, caractérisé en ce que la partie conique (23) située sur la face extérieure du piston (18) est suivie d'un évidement (24) permettant, lors du déverrouillage, l'effacement du coulisseau (21) et le dégagement de la cassette.

13. Accouplement selon l'une des revendications 1 à 12, caractérisé en ce que le tirant central (30) porte, au moyen d'articulations (43), des bras de pince (42) libres en pivotement et articulés à l'une de leurs extrémités, les têtes (31), (41) du tirant central (30) et de la tige de commande (40) du système de retenue présentant des bossages annulaires servant de prise aux pinces, tandis que la face intérieure située à l'extrémité du piston présente une portée conique (32) inclinée vers l'avant, de façon à ce qu'en position de liaison des deux têtes munies de bossages, la partie cylindrique de la face interne du piston assure la fermeture des pinces reliant ainsi les têtes et, en position de libération de cette liaison, la partie conique de la face interne du piston permette l'écartement des pinces.

14. Accouplement selon l'une des revendications 1 à 12, caractérisé en ce que la face intérieure du piston est munie, vers son extrémité avant, d'une section de diamètre élargi (26), la tête du tirant (31) étant solidaire d'une pièce de raccordement (60), dans l'extrémité creuse opposée de laquelle est logée la tête (41) de la tige de commande (40), ladite tête présentant une gorge circulaire (45), ladite pièce de raccordement (60) étant montée en coulissement à l'intérieur du piston (18), un ou plusieurs logements pour des coulisseaux (61) étant ménagés dans la pièce de raccordement (60), de façon à ce qu'en position de liaison des deux têtes (31), (41), la partie inférieure de ces derniers coulisseaux (61), sollicités en direction radiale par l'alésage du piston, puisse pénétrer à l'intérieur de ladite gorge (45) de la tête (41) de tige de commande (40) et, en position de libération de ladite liaison, la section de diamètre élargi (26) de la face intérieure du piston (18) permette le retrait de ces coulisseaux (61) hors de ladite gorge (45) et le dégagement de la tige de commande.

## Claims

1. A coupling for producing a quick-action latching engagement between a member of a machine tool (15) and a retaining system such as a tool holder or a clamping device such as a chuck comprising:

   a) an annular body (16) intended to be fixed to said machine tool,

   b) a removable casing member (11) of annular shape, Which is fixed with respect to the retaining system for latching engagement between the member of the machine tool and the retaining system,

   c) an irreversible locking action produced by means of sliders (21) comprising contact surfaces (23) which in a blocking position cooperate with corresponding surfaces of

   d) a piston (18) in the form of a sleeve member in the interior of which is accommodated

   e) a movable central draw member (30) of which the head (31), in the blocking position, is fixedly connected to a control rod (40) of the retaining system,

   f) said annular body (16) being provided at its front face with a member (3) for driving the casing member in rotation, said face having an internal annular shoulder (4),

   g) the front part of the casing member being accommodated against said front face of the annular body and with clearance in relation to said annular shoulder,

   h) said casing member being placed against the front face of the annular body with excellent centering and precision of the order of 0.001 mm maximum,

   i) the internal annular wall of the casing member and the annular wall of the shoulder, at the location at which the front of the casing member is accommodated in said shoulder, having cross-sections formed by at least one conical zone (5a, 16a), the two zones being spaced by a predetermined safety clearance such that axial displacement of the central draw member is possible without its travel movement being limited by constraints due to the other coupling or locking member.

2. A coupling according to claim 1 characterised in that the value of the clearance between the conical zones varies between 0.002 and 0.010 mm.

3. A coupling according to claim 2 characterised in that the value of the clearance between the conical zones varies between 0.004 and 0.006 mm.

4. A coupling according to one of claims 1 to 3 characterised in that the conical zones (5a), (16a) are followed by cylindrical zones (5b), (16b) with the axis parallel to the axis of the casing member, said cylindrical zones being spaced from each other by a predetermined clearance.

5. A coupling according to claim 4 characterised in that the value of the clearance between the cylindrical zones varies between 0.3 and 1.5 mm.

6. A coupling according to claim 5 characterised in that the value of the clearance between the cylindrical zones varies between 0.5 and 1

7. A coupling according to one of claims 1 to 3 characterised in that the conical zones (5a), (16a) of the cross-sections of the annular walls are inclined forwardly at an angle which can vary from 10 to 30° to the axis of the casing member.

8. A coupling according to one of claims 1 to 7 characterised in that provided between the front annular part of the annular body (16), which has an internal annular boss (19), and its end (20) are openings or a groove for accommodating said sliders (21).

9. A coupling according to claim 8 characterised in that the internal annular boss (19) of the annular body (16) and its end (20) constitute guide surfaces for the piston (18).

10. A coupling according to claim 8 characterised in that the lower face of each slider (21) is inclined to co-operate in the locking position with a conical part (23) on the piston on its outside face.

**11.** A coupling according to one of claims 1 to 10 characterised in that, at the location at which each slider (21) is disposed, the internal annular wall of the casing member has an opening (6) so that in the locking position a bevelled face (7) of the slider comes to bear with a cling action against a corresponding bevelled face (8) on the internal shoulder of the casing member.

**12.** A coupling according to one of claims 1 to 10 characterised in that the conical part (23) disposed on the external face of the piston (18) is followed by an opening (24) which, in the unlocking operation, permits retraction of the slider (21) and disengagement of the casing member.

**13.** A coupling according to one of claims 1 to 12 characterised in that the central draw member (30) carries by means of pivot mountings (43) gripping arms (42) which are freely pivotable and which are pivotally mounted at one of their ends, the heads (31), (41) of the central draw member (30) and the control rod (40) of the retaining system having annular bosses acting as engagement means for the gripping arms, while the internal face disposed at the end of the piston has a forwardly inclined conical bearing surface (32) such that in the connecting position of the two heads which are provided with bosses, the cylindrical part of the internal face of the piston provides for closure of the gripping arms, thus connecting the heads, and in the release position for said connection, the conical part of the internal face of the piston permits the gripping arms to move apart.

**14.** A coupling according to one of claims 1 to 12 characterised in that towards its front end the internal face of the piston is provided with a section (26) of enlarged diameter, the head of the draw member (30) being fixed with respect to a connecting portion (60), in the opposite hollow end of which is accommodated the head (41) of the control rod (40), said head having a circular groove (45), said connecting portion (60) being mounted slidably inside the piston (18), one or more housings for accommodating sliders (61) being provided in the connecting portion (60) in such a way that in the connecting position of the two heads (31), (41), the lower part of the latter sliders (61) which are urged in the radial direction by the bore of the piston can penetrate into said groove (45) in the head (41) of the control rod (40) and, in the position of freeing said connection, the section (26) of enlarged diameter of the internal face of the piston (18) permits retraction of said sliders (61) out of said groove (41) and disengagement of the control rod.

**Patentansprüche**

**1.** Kupplung zur Schnellbefestigung eines Halterungssystems, insbesondere eines Werkzeughalters oder einer Einspannvorrichtung, wie zum Beispiel eines Bohrfutters, an einem Teil einer Werkzeugmaschine (15), mit folgenden Merkmalen:

    a) einem an der Werkzeugmaschine anbringbaren Ringkörper (16),
    b) einer ringförmigen, abnehmbaren und mit dem Halterungssystem einstückigen Kassette (1) zur Verkupplung des Teils der Werkzeugmaschine mit dem Halterungssystem,
    c) eine mit Schieberelementen (21) realisierte, blockierbare Verriegelung, wobei die Schieberelemente Kontaktflächen (23) aufweisen, die in der verriegelten Stellung mit entsprechenden Flächen
    d) eines hülsenförmigen Kolbens (18) zusammenwirken, in dessen Innerem
    e) eine mittige, bewegliche Spannstange (30) angeordnet ist, deren Kopfende in der verriegelten Stellung starr mit einer Steuerstange (40) des Halterungssystems verbunden ist, wobei:
    f) der Ringkörper (16) an seiner Vorderseite mit Mitnahmemitteln (3) zur Rotation der Kassette versehen ist und diese Vorderseite eine innenliegende Ringschulter (4) aufweist,
    g) der vordere Teil der Kassette an der Vorderseite des Ringkörpers mit Spiel gegenüber der Ringschulter angeordnet ist,
    h) die Kassette mit genauer Zentrierung und Präzision in einer Größenordnung von maximal 0,001 mm an der Vorderseite des Ringkörpers angeordnet ist und
    i) die innere ringförmige Wand der Kassette und die ringförmige Wand der Schulter bei Anordnung des vorderen Teils der Kassette gegen die Ringschulter jeweils wenigstens einen im Querschnitt konisch gestalteten Bereich (5a, 16a) aufweisen, wobei die beiden Bereiche sicherheitshalber mit einem vorbestimmten Spiel der gestalt voneinander beabstandet sind, daß eine axiale Verschiebung der mittigen Spannstange möglich ist, ohne daß deren Hub durch Begrenzungen aufgrund anderer Teile der Kupplung oder der Verriegelung eingeschränkt ist.

2. Kupplung nach Anspruch 1, dadurch gekennzeichnet, daß die Größe des Spiels zwischen den konischen Bereichen zwischen 0,002 mm und 0,01 mm liegt.

3. Kupplung nach Anspruch 2, dadurch gekennzeichnet, daß die Größe des Spiels zwischen den konischen Bereichen zwischen 0,004 mm und 0,006 mm liegt.

4. Kupplung nach einem der Ansprüche 1 bis 3, dadurch gekennzeichnet, daß sich an die konischen Bereiche (5a, 16a) zylinderförmige Bereiche (5b, 16b) anschließen, deren zugehörige Zylinderachse parallel zur Achse der Kassette ist und die ein vorbestimmtes Spiel zwischen sich belassend voneinander beabstandet sind.

5. Kupplung nach Anspruch 4, dadurch gekennzeichnet, daß die Größe des Spiels zwischen den zylindrischen Zonen zwischen 0,3 mm und 1,5 mm liegt.

6. Kupplung nach Anspruch 5, dadurch gekennzeichnet, daß die Größe des Spiels zwischen den zylindrischen Bereichen zwischen 0,5 mm und 1 mm liegt.

7. Kupplung nach einem der Ansprüche 1 bis 3, dadurch gekennzeichnet, daß die im Querschnitt konischen Bereiche (5a, 16a) der ringförmigen Wände nach vorne um einen Winkel zwischen 10° und 30° gegenüber der Achse der Kassette geneigt sind.

8. Kupplung nach einem der Ansprüche 1 bis 7, dadurch gekennzeichnet, daß zwischen einem vorderen, ringförmigen Teil des Ringkörpers (16), der einen inneren, ringförmigen Vorsprung (19) aufweist, und seinem äußersten Ende (20) Aussparungen oder ein Durchlaß zur Aufnahme der Schieberelemente (21) vorgesehen sind.

9. Kupplung nach Anspruch 8, dadurch gekennzeichnet, daß der innere ringförmige Vorsprung (19) des Ringkörpers (16) sowie dessen äußerstes Ende (20) Flächen zur Führung des hülsenförmigen Kolbens (18) aufweisen.

10. Kupplung nach Anspruch 8, dadurch gekennzeichnet, daß die Innenfläche jedes Schieberelementes (21) so geschrägt ist, daß sie in der verriegelten Stellung mit einem konischen Bereich (23) zusammenwirkt, welcher an der Außenseite des Kolbens gebildet ist.

11. Kupplung nach einem der Ansprüche 1 bis 10, dadurch gekennzeichnet, daß die innere ringförmige Wand der Kassette eine Aussparung (6) zur Unterbringung jedes Schieberelements (21) aufweist, wodurch in der verriegelten Stellung eine Schrägfläche (7) des Schieberelements unter Spannung gegen eine zugehörige Schrägfläche (8) einer inneren Schulter der Kassette zur Anlage kommt.

12. Kupplung nach einem der Ansprüche 1 bis 10, dadurch gekennzeichnet, daß benachbart zu dem an der Außenseite des Kolbens (18) gebildeten konischen Bereich (23) eine Aussparung (24) vorgesehen ist, die bei einer Entriegelung das Zurückschieben der Schieberelemente (21) und das Abnehmen der Kassette gestattet.

13. Kupplung nach einem der Ansprüche 1 bis 12, dadurch gekennzeichnet, daß die mittige Spannstange (30) an Gelenken (43) einseitig angelenkte, schwenkbare Klemmhaken (42) trägt und daß die Kopfenden (31, 41) der mittigen Spannstange (30) und der Steuerstange (40) des Halterungssystems ringförmige Vorsprünge für eine Verhakung aufweisen, während die Innenfläche am äußeren Ende des Kolbens einen derart nach vorn geneigten konischen Bereich (32) aufweist, daß in der miteinander verbundenen Stellung der beiden mit den Vorsprüngen versehenen Stangenköpfe der zylindrische Teil der inneren Fläche des Kolbens den Verschluß der Haken und damit die Verbindung der Kopfenden sichert und in der Stellung, in der diese Verbindung gelöst ist, der konische Bereich der inneren Fläche des Kolbens das Aufspreizen der Haken gestattet.

14. Kupplung nach einem der Ansprüche 1 bis 12, dadurch gekennzeichnet, daß die innere Fläche des Kolbens in Richtung seines vorderen Endes einen Abschnitt mit vergrößertem Durchmesser (26) aufweist, daß einstückig am Kopf der Spannstange (31) ein Verbindungselement (60) vorgesehen ist, daß der Kopf (41) der Steuerstange (40) in einem zugewandten, hohlen Ende des Verbindungselements aufgenommen ist, daß der Steuerstangenkopf eine ringförmige Nut (45) aufweist, daß das Verbindungselement (60) verschieblich im Inneren des Kolbens (18) gehalten ist, daß eine oder mehrere Aufnahmen für weitere Schieberelemente (61) in dem Verbindungselement (60) derart vorgesehen sind, daß in der Stellung, in der die beiden Stangenköpfe (31, 41) miteinander verbunden sind, der innere Teil dieser, in radialer Richtung durch eine Bohrung im Kolben geführten, weiteren Schieberelemente (61) wirksam in das Innere der Ringnut (45) des Kopfes (41) der Steuerstange (40) eingreift und in der Stellung, in der diese Verbindung gelöst ist, der Abschnitt mit vergrößertem Durchmesser (26) an der Innenseite des Kolbens (18) das Zurückschieben der Schieberelemente (41) aus der Ringnut (45) und das Ablösen der Steuerstange erlaubt.

Fig. 1

Fig. 2